# EUROPÄISCHE PATENTSCHRIFT

(11) **EP 0 820 576 B1**
(45) Veröffentlichungstag und Bekanntmachung des Hinweises auf die Patenterteilung: **17.01.2001**
(21) Anmeldenummer: 96914879.0
(22) Anmeldetag: 04.04.1996
(51) Int. Cl.: F41H 1/08, F41H 5/04

(54) **ANTIBALLISTISCHER SCHUTZHELM**
ANTI-BALLISTIC PROTECTIVE HELMET
CASQUE DE PROTECTION ANTIPROJECTILES

(30) Priorität: 08.04.1995 DE 19513473
(43) Veröffentlichungstag der Anmeldung: 28.01.1998
(73) Patentinhaber: Akzo Nobel N.V., 6824 BM Arnhem (NL)
(72) Erfinder: SCHUSTER, Dieter, Hans, Peter, D-38524 Sassenburg (DE); FELS, Achim, Gustav, D-42109 Wuppertal (DE)
(74) Vertreter: Fett, Günter, Dipl.-Ing.
(86) Internationale Anmeldenummer: EP9601476
(87) Internationale Veröffentlichungsnummer: WO9632620

(56) Entgegenhaltungen:
- WO-A-89/01123
- DE-A- 3 806 204
- FR-A- 2 697 626
- US-A- 5 018 220

## Beschreibung

Die Erfindung betrifft einen Helm, insbesondere einen antiballistischen Schutzhelm, bestehend aus mehreren, in eine Matrix eingebetteten und über diese Matrix miteinander verbundenen Lagen textiler Flächengebilde.

Helme für Militär- und Polizeikräfte sind normalerweise antiballistische Helme, d.h. daß diese Helme kugel- und splitterhemmend wirken und so den Träger des Helmes vor Kopfverletzungen als Folge einer Geschoßeinwirkung schützen.

Solche Helme enthalten als eigentliche Schutzlagen meistens Gewebe aus antiballistisch wirksamen Fasern, wie beispielsweise Aramidfasern. So sind Helme, die 15 Lagen Aramidgewebe, die mit Phenolharz imprägniert und nach einem für die Helmherstellung geeigneten Zuschnitt miteinander verpreßt wurden, als antiballistischer Kopfschutz sehr häufig anzutreffen.

Üblicherweise sind die eigentlichen Schutzlagen solcher Helme Gewebe, es wurde aber hierfür auch schon der Einsatz von Maschenwaren vorgeschlagen. So werden in DE-A 38 06 204 "Gewebe und Gewirke mit loser Fadenbindung" für die Herstellung von Helmen genannt. Ebenso erwähnt US-A 4 343 047 gestrickte oder gewebte textile Flächengebilde für die Herstellung von Helmen.

Schließlich werden auch in einer Zeitschriftenpublikation eines Herstellers von Aramidfasern (Du Pont-Magazin, 1988, Nr. 1, Seiten 10 - 13) "aus Kevlar gestrickte Kappen" (Kevlar ist der Markenname für eine Aramidfaser dieses Herstellers) als Vorprodukte für Helme genannt.

Alle diese Publikationen sehen die Maschenware, worunter Gewirke und Gestricke zusammengefaßt werden, als eine Alternative zum Gewebe, das heißt, daß aus diesen Publikationen die Lehre abzuleiten ist, daß die Verstärkungslagen eines antiballistischen Helmes entweder aus Geweben oder aus Maschenwaren hergestellt werden sollen. Die Möglichkeit einer gemeinsamen Verarbeitung von Geweben und Maschenwaren in einem Helm erwähnen sie nicht, ebensowenig läßt sich aus diesen Dokumenten ableiten, welche Art von Maschenware für den Einsatz im Helm besonders geeignet erscheint.

Die Weiterentwicklung antiballistischer Schutzkleidung, wozu auch Helme zu zählen sind, mit dem Ziel der Verbesserung der Schutzwirkung gegen die Einwirkung von Geschossen, Splittern etc. ist eine Daueraufgabe der an der Entwicklung solcher Kleidung beteiligten Stellen, da jeder erreichbare Fortschritt dem Erhalt von Menschenleben und dem Schutz vor Verletzungen dient. Deshalb bestand die Aufgabe, auch die Schutzwirkung von antiballistischen Helmen weiter zu verbessern.

Überraschend wurde gefunden, daß dies in besonders vorteilhafter Weise gelingt, wenn die im Helm enthaltenen, aus textilen Flächengebilden bestehenden äußeren Schutzlagen, d.h. die Schutzlagen auf der dem Träger abgewandten, also der dem Beschuß zuerst ausgesetzten Seite, aus multiaxialer Wirkware aus antiballistisch wirksamen Fasern gebildet werden.

Unter textilen Flächengebilden sind alle aus Fasermaterialien entstehenden Flächengebilde wie Gewebe, Maschenwaren, Vliesstoffe, Fadengelege etc. zu verstehen. Von besonderer Bedeutung sind für den erfindungsgemäßen Helm Maschenwaren und Gewebe.

Unter antiballistisch wirksamen Fasern sind alle Fasermaterialien zu verstehen, die in Form von textilen Flächengebilden mit hoher Geschwindigkeit sich bewegende Stücke wie beispielsweise Geschosse, Splitter und dgl. aufhalten oder deutlich abbremsen.

Beispiele antiballistischer Fasern sind Aramidfasern, nach dem Gelspinnverfahren ersponnene Polyethylenfasern, Glasfasern oder Metallfasern. Aramidfasern werden für die Herstellung des erfindungungsgemäßen Helmes bevorzugt.

Aramidfasern, die teilweise auch als aromatische Polyamidfasern bezeichnet werden, sind in der Textilindustrie für die Herstellung von Schutzkleidung allgemein bekannt. Sie sind unter Bezeichnungen wie beispielsweise Twaron im Handel.

Die Aramidfasern können in der multiaxialen Wirkware und im Gewebe alleine oder in Mischungen mit anderen Fasern vorliegen. Im Interesse einer guten antiballistischen Wirksamkeit wird bei Verwendung von Mischungen die Mischung von Aramidfasern mit anderen antiballistisch wirksamen Fasern bevorzugt.

Die für die Herstellung der multiaxialen Wirkware bzw. des Gewebes einzusetzenden Garne können Filament- oder Spinnfasergarne sein. Wegen der mit Filamentgarnen erreichbaren höheren Festigkeiten, werden diese bevorzugt. Bei den Titern der einzusetzenden Garne bestehen keine Beschränkungen. Diese können beispielsweise zwischen 500 und 4 000 dtex liegen.

Unter multiaxialer Wirkware sind mehrachsige Fadengelege, die mindestens zwei Fadensysteme aufweisen und die mittels Wirktechnik durch einen Maschenfaden bzw. eine Bindekette miteinander verbunden sind, zu verstehen. Die multiaxiale Wirkware wird meistens als zu den Maschenwaren gehörend betrachtet. Es handelt sich hier aber um eine Struktur, die sich im Grenzbereich zwischen Maschenware und Fadengelege befindet. Die multiaxiale Wirkware wird deshalb teilweise auch als verwirktes multiaxiales Fadengelege bezeichnet.

Prinzipiell ist es auch möglich, monoaxiale Strukturen, also beispielsweise eine normale Kettwirkware, zur Herstellung des erfindungsgemäßen Helmes einzusetzen. Multiaxiale Strukturen haben sich aber als geeigneter erwiesen.

Bei der Herstellung der multiaxialen Wirkware können auf den gegenwärtig bekannten Maschinen bis zu acht Fadensysteme eingesetzt werden. Für die Herstellung des erfindungsgemäßen Helmes wird eine multiaxiale Wirkware mit drei bis vier Fadensystemen bevorzugt. Die Erfindung soll jedoch nicht auf eine bestimmte Art von multiaxialer Wirkware bzw. auf eine bestimmte Zahl von Fadensystemen beschränkt bleiben, sondern alle Varianten dieser Material-Klasse umfassen.

Neben Variationsmöglichkeiten in der Zahl der Fadensysteme bietet die multiaxiale Wirkware eine weitere Einstellungsmöglichkeit durch die Anordnung der Systeme, die durch die Angabe eines Winkels charakterisiert wird. Hierbei wird von einer 0°-Linie ausgegangen. Diese bildet die Längsachse der Ware in Produktionsrichtung. Unter dieser 0°-Linie ist somit die in der Mitte der Warenbahn in gleichen Abständen zu den beiden Rändern der Warenbahn verlaufende Achse zu verstehen.

Die Anordnung der anderen Fadensysteme wird in Winkeln zu dieser Längsachse oder 0°-Linie angegeben, wobei die, in Laufrichtung der Ware gesehen, rechts von der 0°-Linie angeordneten Fadensysteme normalerweise mit einem positiven Vorzeichen bei der Winkelangabe und die links angeordneten Fadensysteme üblicherweise mit einem negativen Vorzeichen versehen werden. Hierbei sind Winkel zwischen 30 und 60° möglich. Weitere Fadensysteme können quer zur Längsachse verlaufen und bilden somit dann einen Winkel von 90°, durch den sie gekennzeichnet werden.

Die Verfestigung dieser so erzeugten Fadenlagen erfolgt durch einen Wirkfaden, der meistens in Richtung der 0°-Achse verläuft. Wenn bei der Herstellung der multiaxialen Wirkware Mischungen von antiballistisch wirksamen Fasern mit nicht antiballistisch wirksamen Fasern zum Einsatz kommen, so ist es zweckmäßig, das antiballistisch nicht wirksame Fasermaterial für den Wirkfaden vorzusehen und für die anderen Fadensysteme bevorzugt antiballistisch wirksame Fasern einzusetzen.

Die Herstellung der multiaxialen Wirkware erfolgt auf den in der Textilindustrie hierfür bekannten Maschinen, die üblicherweise als Kettenwirkmaschinen mit multiaxialen Schußeintragssystemen bezeichnet werden.

Das Flächengewicht der multiaxialen Wirkware sollte in dem Bereich zwischen 200 und 600 g/m² liegen, bevorzugt wird ein Bereich zwischen 300 und 500 g/m².

Die multiaxiale Wirkware wird in den Lagen des äußeren Helmbereiches, also auf der dem Träger abgewandten Seite des Helmes, eingesetzt. In diesen Lagen kommt der Vorteil der multiaxialen Wirkware voll zur Geltung, wie in den Ausführungsbeispielen noch gezeigt wird.

Beispielsweise besteht ein Helm aus insgesamt 15 Lagen eines textilen Flächengebildes aus antiballistisch wirksamen Fasern. Von diesen Lagen können zum Beispiel, von außen nach innen, die Lagen 1 - 10 oder 1 - 12 aus multiaxialer Wirkware und die Lagen 11 - 15 oder 13 - 15 aus Geweben bestehen. Beide textilen Flächengebilde werden aus antiballistisch wirksamen Fasern, zum Beispiel aus Aramidfasern, hergestellt. Der Gesamtanteil der multiaxialen Wirkware an den Verstärkungslagen beträgt 50 - 90 Gewichts%, bevorzugt 60 - 80 Gewichts%.

Es ist auch möglich, den Helm mit Anteilen unter 50 %, bezogen auf die Gesamtmenge der Verstärkungslagen, herzustellen, bessere Ergebnisse wurden aber erzielt, wenn der Gewichtsanteil der Lagen aus multiaxialer Wirkware denjenigen der Lagen aus Geweben übersteigt.

Sowohl die Gewebelagen als auch die Lagen aus multiaxialer Wirkware werden mit einem Polymer, das dann im Helm die Matrix bildet, ausgerüstet. Beispielsweise kann dies ein Phenolharz sein. Die Menge des aufgebrachten Matrixmaterials beträgt üblicherweise 10 bis 30%, bevorzugt 10 bis 20 %, bezogen auf das Trockengewicht des auszurüstenden textilen Flächengebildes. So kann beispielsweise auf eine multiaxiale Wirkware mit einem Flächengewicht von 410 g/m² eine Phenolharzauflage von 55 g/m² aufgebracht werden, was einer Auftragsmenge von 13,4% entspricht.

Neben Phenolharz können auch andere Polymere als Matrixmaterial für antiballistische Helme Einsatz finden. Hierfür geeignet ist eine große Zahl von Polymeren aus dem Bereich der Duromeren, Elastomeren und Thermoplaste. Beispiele einsatzfähiger Produkte sind Vinylester, Epoxyharze, Acrylharze, ungesättigte Polyester oder Alkydharze. Wegen ihrer guten Eignung für antiballistische Artikel und wegen ihrer Nichtbrennbarkeit werden Phenolharze bevorzugt.

Wie in den Ausführungsbeispielen noch gezeigt wird, kommt der positive Effekt der multiaxialen Wirkware überraschenderweise besonders dann zur Geltung, wenn diese Ware in Kombination mit einem herkömmlichen Gewebe im Helm zum Einsatz kommt, das heißt, wenn die äußeren Lagen des Helmes aus multiaxialer Wirkware und die inneren Lagen aus Gewebe gebildet werden. Die antiballistischen Eigenschaften sind in dieser Kombination deutlich besser als bei Helmen, bei denen nur multiaxiale Wirkware oder nur Webware, jeweils aus antiballistisch wirksamen Fasern hergestellt, zum Einsatz kommt.

Die erfindungsgemäße Anordnung der in eine Matrix eingebetteten und über diese Matrix miteinander verbundenen Lagen textiler Flächengebilde zeigt eine besonders günstige antiballistische Wirksamkeit beim Splitterbeschuß von Helmen. Außer Helmen können aber auch andere antiballistische Materialien wie beispielsweise Fahrzeugpanzerungen, geschoßhemmende Stellwände etc. in ähnlicher Weise aufgebaut werden, wobei die multiaxiale Wirkware jeweils auf der Seite angeordnet ist, auf der ein Auftreffen von Geschossen oder Splittern erwartet wird.

Bis jetzt ist es nicht gelungen, eine ausreichende Erklärung für die sehr überraschende antiballistische Wirkung des erfindungsgemäßen Helmes zu finden. Eine mögliche Ursache könnte sein, daß sich beim Beschuß eines Helmes, der in den äußeren Lagen multiaxiale Wirkware enthält, die Deformationswellen, die die vom textilen Flächengebilde aufgenommene Energie transportieren, aufgrund der Ausrichtung der Fadenlagen besonders ungestört ausbreiten können, was bei einem Gewebe auf Grund von dessen Konstruktion wegen der gegenseitigen Umschlingungen der Fadensysteme nicht möglich ist.

Wie in den Ausführungsbeispielen noch näher gezeigt wird, kann mit dem erfindungsgemäßen Helm gegenüber den herkömmlichen Helmen eine deutliche Verbesserung des antiballistischen Effektes erzielt und somit ein wichtiger Beitrag zu der erhöhten Sicherheit der Träger von solchen Helmen geleistet werden.

### Ausführungsbeispiele

### Ausführungsbeispiel 1

Dieses Beispiel beschreibt die Herstellung der für die Versuche eingesetzten Gewebe. Hierzu wurde ein Filamentgarn aus Aramidfasern mit einem Titer von 3 360 dtex mit Fadenzahlen von je 6,2/cm in Kette und Schuß in Leinwandbindung zu einem Gewebe verarbeitet. Das Flächengewicht des erhaltenen Gewebes betrug 412 g/m².

Das so hergestellte Gewebe wurde mit einem Phenolharz imprägniert. Die Harzauflage betrug 12 %, das heißt, das Flächengewicht des imprägnierten und getrockneten Gewebes betrug 461 g/m².

### Ausführungsbeispiel 2

Dieses Beispiel beschreibt die Herstellung der multiaxialen Wirkware. Auf einer Kettenwirkmaschine mit multiaxialem Schußeintragssystem, System Liba, wurde Filamentgarn aus Aramidfasern mit einem Titer von 3 360 dtex zu einer multiaxialen Wirkware verarbeitet. Hierzu wurde mit drei Fadensystemen gearbeitet, die in Winkeln von +45°, -45° und 90° angeordnet wurden. Alle drei Systeme und der Wirkfaden bestanden aus dem gleichen Garn. Das Flächengewicht der erhaltenen Ware betrug 409 g/m².

Die so hergestellte multiaxiale Wirkware wurde mit einem Phenolharz imprägniert. Die Harzauflage betrug 12 %, das heißt, das Flächengewicht der imprägnierten und getrockneten multiaxialen Wirkware betrug 458 g/m².

### Ausführungsbeispiel 3

Das nach Ausführungsbeispiel 1 hergestellte Gewebe und die nach Ausführungsbeispiel 2 hergestellte multiaxiale Wirkware wurden miteinander zu einem Helm verarbeitet. Hierzu wurden aus 11 Lagen der multiaxialen Wirkware und aus 4 Lagen des Gewebes für die Helmherstellung geeignete Zuschnitte angefertigt. Aus jeder Lage wird dabei eine sogenannte Ronde gebildet. Dies ist ein auf die Helmform ausgerichteter Zuschnitt mit einem runden oder ovalen Mittelteil und mehreren Seitenteilen, die beispielsweise ungefähr die Form eines Trapezes aufweisen können.

Die einzelnen Ronden werden so in die Form für die Helmherstellung eingelegt, daß die Schnittstellen der Seitenteile nicht genau übereinander liegen, sondern das Seitenteil der oberen Lage die Schnittstelle der darunterliegenden Lage etwas abdeckt und somit den Nachbarzuschnitt überlappt. Die einzelnen Lagen werden dann miteinander verpreßt, wobei das auf das textile Flächengebilde aufgebrachte Polymer die Matrix bildet. Diese Art der Herstellung antiballistischer Helme ist in der Helmindustrie allgemein bekannt.

Die Anordnung der einzelnen Lagen erfolgte so, daß von außen nach innen zunächst 11 Lagen multiaxialer Wirkware, hergestellt nach Ausführungsbeispiel 2, und danach 4 Gewebelagen, hergestellt nach Ausführungsbeispiel 1, im Helm vorhanden waren.

Dieser Helm wurde einem Splitterbeschuß nach den Bedingungen von STANAG 2920 unterzogen. Der Beschuß erfolgte mit 1,1 g- Splittern. Der hierbei erhaltene V50-Wert lag bei 720 m/sec. Dieser Wert bedeutet, daß bei der genannten Beschußgeschwindigkeit eine Penetrationswahrscheinlichkeit von 50 % besteht.

### Ausführungsbeispiel 4

Ausführungsbeispiel 3 wurde wiederholt, wobei 10 Lagen der multiaxialen Wirkware, hergestellt nach Ausführungsbeispiel 2, und 5 Lagen Gewebe, hergestellt nach Ausführungsbeispiel 1, zum Einsatz kamen. Von außen nach innen wies der gemäß der in Ausführungsbeispiel 3 beschriebenen Herstellungsweise angefertigte Helm dann also 10 Lagen multiaxiler Wirkware und danach 5 Lagen Gewebe auf.

Der so gebildete Helm wurde einem Splitterbeschuß nach den Bedingungen von STANAG 2920 unterzogen. Der Beschuß erfolgte mit 1,1 g- Splittern. Der hierbei erhaltene V50-Wert lag bei 710 m/sec.

### Ausführungsbeispiel 5

Ausführungsbeispiel 3 wurde wiederholt, wobei 12 Lagen der multiaxialen Wirkware, hergestellt nach Ausführungsbeispiel 2, und 3 Lagen Gewebe, hergestellt nach Ausführungsbeispiel 1, zum Einsatz kamen. Von außen nach innen wies der gemäß der in Ausführungsbeispiel 3 beschriebenen Herstellungsweise angefertigte Helm dann also 12 Lagen multiaxiler Wirkware und danach 3 Lagen Gewebe auf.

Der so gebildete Helm wurde einem Splitterbeschuß nach den Bedingungen von STANAG 2920 unterzogen. Der Beschuß erfolgte mit 1,1 g- Splittern. Der hierbei erhaltene V50-Wert lag bei 710 m/sec.

### Vergleichsbeispiel 1

Unter Anwendung des in Ausführungsbeispiel 3 beschriebenen Verfahrens wurde ein Helm aus 15 Lagen eines Gewebes, hergestellt nach Ausführungsbeispiel 1, geformt.

Dieser Helm wurde einem Splitterbeschuß nach den Bedingungen von STANAG 2920 unterzogen. Der Beschuß erfolgte mit 1,1 g- Splittern. Der hierbei erhaltene V50-Wert lag bei 640 m/sec.

Der Vergleich des Ergebnisses dieses Beispiels mit den Ergebnissen der Ausführungsbeispiele 3 - 5 zeigt, daß ein aus einer Kombination von Gewebe und multiaxialer Wirkware gemäß Beispiel 3 - 5 hergestellter Helm eine deutlich bessere antiballistische Wirksamkeit aufweist als ein alleine aus Gewebe hergestellter Helm.

### Ausführungsbeispiel 2A

15 Lagen multiaxialer Wirkware, hergestellt nach Ausführungsbeispiel 2, wurden nach dem in Ausführungsbeispiel 3 beschriebenen Verfahren zu einem Helm verarbeitet.

Dieser Helm wurde einem Splitterbeschuß nach den Bedingungen von STANAG 2920 unterzogen. Der Beschuß erfolgte mit 1,1 g- Splittern. Der hierbei erhaltene V50-Wert lag bei 675 m/sec.

Der Vergleich des Ergebnisses dieses Beispiels mit den Ergebnissen der Ausführungsbeispiele 3 - 5 und von Vergleichsbeispiel 1 zeigt, daß ein aus einer Kombination von Gewebe und multiaxialer Wirkware gemäß Beispiel 3 - 5 hergestellter Helm nicht nur eine deutlich bessere antiballistische Wirksamkeit aufweist als ein alleine aus Gewebe hergestellter Helm, sondern auch eine bessere antiballistische Wirksamkeit als ein alleine aus multiaxialer Wirkware hergestellter Helm.

### Vergleichsbeispiel 3

Filamentgarn aus Aramidfasern mit einem Titer von 3 360 dtex wurde auf einer Strickmaschine zu einem Gestrick mit einem Flächengewicht von 458 g/m² verarbeitet. Anschließend erfolgte eine Imprägnierung mit Phenolharz. Nach dieser Behandlung und dem anschließenden Trocknen hatte das Gestrick ein Flächengewicht von 513 g/m².

Aus insgesamt 13 Lagen des Gestricks wurde nach dem in Ausführungsbeispiel 3 beschriebenen Verfahren ein Helm geformt. Die Lagenzahl wurde gegenüber Ausführungsbeispiel 3 bzw. Vergleichsbeispiel 1 und Ausführungsbeispiel 2A verringert, da der Einsatz von 15 Lagen ein zu hohes Gesamtgewicht ergeben hätte und damit die Vergleichbarkeit nicht mehr gewährleistet wäre.

Der so hergestellte Helm wurde einem Splitterbeschuß nach den Bedingungen von STANAG 2920 unterzogen. Der Beschuß erfolgte mit 1,1 g- Splittern. Der hierbei erhaltene V50-Wert lag bei 465 m/sec.

### Vergleichsbeispiel 4

Filamentgarn aus Aramidfasern mit einem Titer von 3 360 dtex wurde auf einer Kettenwirkmaschine zu einer Kettenwirkware mit monoaxialer Struktur mit einem Flächengewicht von 462 g/m² verarbeitet. Anschließend erfolgte eine Imprägnierung mit Phenolharz. Nach dieser Behandlung und dem anschließenden Trocknen hatte die Wirkware ein Flächengewicht von 517 g/m².

Aus insgesamt 13 Lagen dieser Kettenwirkware wurde nach dem in Ausführungsbeispiel 3 beschriebenen Verfahren ein Helm geformt. Wie bei Vergleichsbeispiel 3 wurde auch hier die Lagenzahl gegenüber Ausführungsbeispiel 3 bzw. Vergleichsbeispiel 1 und Ausführungsbeispiel 2A verringert, da der Einsatz von 15 Lagen ein zu hohes Gesamtgewicht ergeben hätte.

Der so hergestellte Helm wurde einem Splitterbeschuß nach den Bedingungen von STANAG 2920 unterzogen. Der Beschuß erfolgte mit 1,1 g-Splittern. Der hierbei erhaltene V50-Wert lag bei 630 m/sec.

Die Vergleichsbeispiele 3 und 4 zeigen, daß mit anderen Arten von Maschenwaren, wie hier mit einem Gestrick oder mit einer Kettenwirkware, das günstige Ergebnis der multiaxialen Wirkware ( Ausführungsbeispiel 2A) nicht erreichbar ist.

Die in den Ausführungs- und Vergleichsbeispielen erhaltenen Ergebnisse sind in der nachfolgenden Tabelle nochmals zusammengestellt:

| | Helmaufbau | V50-Wert m/sec |
|---|---|---|
| Ausf. beisp. 3 | 11 L. MA+ | 720 |
| | 4 L. Gew. | |
| Ausf. beisp. 4 | 10 L. MA+ | 710 |
| | 5 L. Gew. | |
| Ausf. beisp. 5 | 12 L. MA+ | 710 |
| | 3 L. Gew. | |
| Vergl. beisp. 1 | 15 L. Gew. | 640 |
| Ausf. beisp. 2A | 15 L. MA | 675 |
| Vergl. beisp. 3 | 13 L. Gestr. | 465 |
| Vergl. beisp. 4 | 13 L. Kettw. | 630 |

Hierbei bedeuten: L.=Lage, MA=Multiaxiale Wirkware, hergestellt gemäß Ausführungsbeispiel 2, Gew.=Gewebe, hergestellt gemäß Ausführungsbeispiel 1, Gestr.=Gestrick, wie in Vergleichsbeispiel 3 beschrieben, Kettw.=Kettenwirkware, wie in Vergleichsbeispiel 4 beschrieben.

## Patentansprüche

1. Helm, besonders antiballistischer Schutzhelm, bestehend aus mehreren, in eine Matrix eingebetteten und über diese Matrix miteinander verbundenen Lagen textiler Flächengebilde, dadurch gekennzeichnet, daß die Lagen auf der dem Träger abgewandten Seite aus multiaxialer Wirkware aus antiballistisch wirksamen Fasern bestehen.

2. Helm nach Anspruch 1, dadurch gekennzeichnet, daß die Lagen auf der dem Träger zugewandten Seite aus Geweben aus antiballistisch wirksamen Fasern bestehen.

3. Helm nach mindestens einem der Ansprüche 1 - 2, dadurch gekennzeichnet, daß der Anteil der Lagen aus multiaxialer Wirkware 50 - 90 Gewichts% der gesamten Verstärkungslagen beträgt.

4. Helm nach mindestens einem der Ansprüche 1 - 2, dadurch gekennzeichnet, daß der Anteil der Lagen aus multiaxialer Wirkware 60 - 80 Gewichts% der gesamten Verstärkungslagen beträgt.

5. Helm nach mindestens einem der Ansprüche 1 - 4, dadurch gekennzeichnet, daß die antiballistisch wirksamen Fasern Aramidfasern, nach dem Gelspinnverfahren ersponnene Polyethylenfasern, Glasfasern, Metallfasern oder deren Mischungen sind.

6. Helm nach mindestens einem der Ansprüche 1 - 5, dadurch gekennzeichnet, daß die antiballistisch wirksamen Fasern Aramidfasern sind.

## Claims

1. Helmet, in particular antiballistic helmet, consisting of a plurality of textile fabric layers embedded in a matrix resin and joined together via this matrix, characterized in that the layers on the side away from the wearer comprise multiaxial knitted fabric made from antiballistic fibers.

2. Helmet in accordance with Claim 1, characterized in that the layers on the side toward the wearer comprise woven fabric made from antiballistic fibers.

3. Helmet in accordance with at least one of Claims 1-2, characterized in that the layers of multiaxial knitted fabric comprise 50-90% by weight of all reinforcement layers.

4. Helmet in accordance with at least one of Claims 1-2, characterized in that the layers of multiaxial knitted fabric comprise 60-80% by weight of all reinforcement layers.

5. Helmet in accordance with at least one of Claims 1-4, characterized in that the antiballistic fibers are aramide fibers, polyethylene fibers spun by the gel spinning process, glass fibers, metal fibers, or blends thereof.

6. Helmet in accordance with at least one of Claims 1-5, characterized in that the antiballistic fibers are aramide fibers.

## Revendications

1. Casque, plus particulièrement casque antiprojectiles, formé de plusieurs couches de produit textile qui sont noyées dans une matrice et sont liées les unes aux autres par l'intermédiaire de ladite matrice, caractétrisé en ce que, du côté opposé au porteur, les couches sont formées de produit tricoté multiaxe efficace contre les projectiles.

2. Casque selon la revendication 1, caractérisé en ce que les couches du côté tourné vers le porteur sont formées de tissus de fibres efficaces contre les projectiles.

3. Casque selon au moins une des revendications 1 - 2, caractérisé en ce que la proportion des couches de produit tricoté multiaxes représente 50 - 90% en poids de l'ensemble des couches de renfort.

4. Casque selon au moins une des revendications 1 - 2, caractérisé en ce que la proportion des couches de produit tricoté multiaxes représente 60 - 80% en poids de l'ensemble des couches de renfort.

5. Casque selon au moins une des revendications 1 - 4, caractérisé en ce que les fibres efficaces contre les projectiles sont des fibres aramides, des fibres de polyéthylène filées selon le procédé sur gel, des fibres de verre, des fibres métalliques ou des mélanges de celles-ci.

6. Casque selon au moins une des revendications 1 - 5, caractérisé en ce que les fibres efficaces contre les projectiles sont des fibres aramides.
